# EUROPEAN PATENT SPECIFICATION

(11) **EP 1 588 330 B1**
(45) Date of publication and mention of the grant of the patent: **15.04.2009**
(21) Application number: 04706403.5
(22) Date of filing: 29.01.2004
(51) Int. Cl.: G07B 15/00

(54) **VEHICLE ID**
FAHRZEUG-ID
IDENTIFICATION DE VEHICULE

(30) Priority: 30.01.2003 SE 0300221
(43) Date of publication of application: 26.10.2005
(73) Proprietor: Facility Parking Europe AB, 187 33 Täby (SE)
(72) Inventor: VASTAD, Fredrik, S-187 33 Täby (SE); HÄLLBERG, Jesper, S-184 61 Akersberga (SE)
(74) Representative: Estreen, Lars J.F.
(86) International application number: PCT/SE2004/000115
(87) International publication number: WO 2004/068417

(56) References cited:
- US-A- 4 603 390
- US-A- 5 745 052
- PATENT ABSTRACTS OF JAPAN & JP 09 296 621 A (SHINKO ELECTRIC CO LTD ET AL) 18 November 1997

## Description

### TECHNICAL FIELD

The present invention relates to the identification of vehicles. In particular, the present invention relates to the identification of vehicles when entering and exiting a monitored area, for example a car park or at national boundaries.

In particular, the invention relates to a method that prevents the theft of vehicles from a car park, and an arrangement for carrying out the method.

### BACKGROUND ART

Road tolls are increasingly common and, for such road tolls, it is important to be able to identify vehicles without the traffic flow being interrupted too much, in order to be able to charge for the vehicle. Also for automatic traffic monitoring, at barriers to protected areas or more generally for monitored areas, it is important to be able to identify a vehicle. Traditionally, for such identification the registration number is read automatically by image processing. However, such image processing requires a high-quality image in order that an incorrect registration number should not be read off, which complicates such a method. For example, dirt and snow can prevent the correct reading of the registration number.

There is thus a great need for improved identification of vehicles.

When parking vehicles in large public car parks, such as at airports, etc., it is a common problem that the vehicle is stolen while the owner is away.

In many cases it is a long time before the theft is discovered. This can, for example, be the case when a person parks his car in an airport car park before a long stay abroad. In this case, the car is usually not notified as missing until the theft is discovered, that is when the owner returns and finds that the car has been stolen.

There is thus a great need to reduce the risk of the theft of vehicles from public car parks.

Entering and exiting car parks can, for example, be carried out in such a way that the driver obtains a car park ticket at an entrance barrier upon which the time is recorded. Before the vehicle is retrieved, payment for the parking must be made, which is checked by means of the car park ticket at an exit barrier, after which the car is allowed to leave. A disadvantage of this system is that no check is made that it is the same car at the exit as at the entrance. The driver may, for example, have parked an old car in poor condition and obtained a car park ticket, in order later to steal a valuable car and drive it out of the car park using his car park ticket.

Another problem is the theft of vehicles by tailgating, that is a stolen vehicle is driven out closely behind another vehicle that is allowed out through the exit barrier.

In US 5034739, this problem is solved by a camera placed at the entrance barrier taking a picture of the vehicle's registration plate and storing the image in a computer. At the exit, a second camera then takes a new picture of the vehicle's registration plate, after which the computer compares the two pictures and checks whether a payment has been made for the parking for this vehicle, after which it is allowed to leave.

US 4775571 describes a similar solution, but where in addition a picture of the registration plate is transferred onto a car park ticket both at the entrance and at the exit, with both these tickets having to be handed in at the exit barrier together with the payment in order for the car to be allowed to leave.

A disadvantage of these two previously known systems is that the theft of a vehicle can still be carried out by transferring the registration plate to another more valuable car.

GB 2 273 596 describes a vehicle protection system in which data that identifies both the vehicle and the driver are stored together when entering the car park. When exiting, the identities of both the driver and the vehicle are then checked and compared with the stored information. The vehicle identification is carried out by means of a video camera, among other things for obtaining the registration number. It is mentioned, however, that other characteristics of the vehicle can also be determined, such as the orientation of the screws that hold the registration plate and nuances in the vehicle's color.

BE 1010751 also describes a theft prevention system for a car park, where an image is recorded of the vehicle when entering and the image is analyzed, after which the result of the analysis is transferred onto a car park ticket. When exiting, another image of the vehicle is recorded which is analyzed, after which the result of the analysis is compared with the data on the car park ticket. If the data is the same, the vehicle is allowed to leave.

Both these theft prevention systems make the theft of vehicles by changing the registration plate more difficult. However, they have disadvantages, for example problems can arise if the appearance of the vehicle is not the same when entering and exiting, which can be the case in the event of snow falling. In addition, differences in the general lighting at the entrance and exit can make the identification more difficult. It is a considerable disadvantage if the owner of a vehicle is not able to retrieve his own car from a car park because night has fallen while it has been parked, so that the light is different when the car leaves the car park than it was when the car entered the car park.

### DISCLOSURE OF INVENTION

The main aim of the present invention is thus to provide an apparatus and a method for making it possible to identify a vehicle.

An additional particular aim of the present invention is to identify the type of vehicle by recognizing the position and orientation of reflectors on the vehicle.

Yet another particular aim of the present invention is to reduce the risk of theft of vehicles from public car parks, while at the same time avoiding the disadvantages mentioned above.

The abovementioned aims are achieved with an apparatus and a method in accordance with the attached independent claims.

Advantageous alternatives and embodiments of the present invention are achieved by means of apparatus and methods in accordance with the attached dependent claims.

The abovementioned aims are achieved by means of a method for identification of a vehicle, comprising recording with a digital camera at least a first image of the said vehicle which includes at least a registration plate and a light arrangement.

The method comprises the steps of identifying the position on the car and the orientation of the light arrangement from the first image, of determining the type of vehicle on the basis of information stored in a database relating to the position and orientation of light arrangements on different types of cars and the identification of the position and orientation of the light arrangement, and of identifying the position on the car and the orientation of the registration plate in relation to the identified position of the light arrangement from the first image in order in this way to obtain a unique identification of the said vehicle.

By identifying the position and orientation of the light arrangements, a coordinate system on the car is obtained in which the position and orientation of the registration plate can be determined. As the fitting of the registration plate is carried out manually, the position of the registration plate will be unique to each car and by determining the position and orientation of the registration plate, a set of values are obtained that uniquely identifies the car.

The light arrangement can be a rear light arrangement, including reflectors, rear lights and brake lights or a front light arrangement.

By comparing the position and orientation of the rear light arrangements with data stored in a database, the type of vehicle can be identified. For example, a Volvo V70 does not have the rear light arrangement positioned in the same way as a SAAB 93. For this identification, the position of the registration plate on the car can also be used.

It should be noted that, for the determination of the type of vehicle, the determination of the position and orientation of the rear light arrangements can be carried out relatively roughly. When the identification of the type of vehicle has been obtained, however, a very precise coordinate system can be set up, by utilizing information from the database, which is used in order to determine the position and orientation of the registration plate in a very precise way. It is possible to achieve an accuracy of a couple of millimeters.

According to a preferred embodiment, for the recording of the image, the vehicle is illuminated with infrared light, for example by a flash unit or with constant illumination, or with light in the visible spectrum, for example by a flash unit or with constant illumination. Alternatively, laser illumination can also be used.

By lighting the vehicle, a more advantageous image can be obtained, which is easier to analyze.

Alternatively, several images can be recorded, for example three, with different camera settings, such as for example different apertures. Each of these images can then be analyzed and the image that provides the best result can then be used in the further identification of the vehicle.

According to a preferred embodiment of the invention, the determination of the position and orientation of the rear light arrangements/registration plate is carried out by matching a geometric figure that comprises a first and a second axis and a center of gravity, for example an oval or a rectangle, to light fields in the said first image, and of calculating a first set of values on the basis of the size of the said first and second axes, their angle in relation to the perpendicular of the image, and the relation of the centers of gravity of a number of the different light fields to each other. These values determine the position and orientation.

If, for example, an oval is used, a Volvo V70 will have a certain set of values for the longer axis, shorter axis, their angle in relation to a perpendicular, and center of gravity for the light fields that are identified as the rear light arrangements/registration plate, which set of values distinguishes it from other types of car.

The precise distance from the camera to the vehicle can be determined by using stereo camera technology. This can be carried out by means of two cameras or by taking a first image, moving the camera a known distance and taking another image. According to a variant of the invention, the system comprises an ultrasound arrangement which is placed at a known distance from the camera. The ultrasound arrangement sends out ultrasound towards the vehicle and detects reflections and by this means the distance from the camera to the vehicle can be determined. When the distance to the vehicle is known, the actual size of the light arrangements and the registration plate can be determined. This can be of great use in the further analysis, in order for example to determine the type of vehicle.

The type of vehicle is identified by searching in the database for values that are the same as the said first set of values and by associating the said vehicle with the type of vehicle which is associated in the database with the said first set of values.

Values for a Volvo V70, for example, are stored in the database and, after a normalization, it is checked whether the calculated values are the same as the values stored in the database. If this is the case, the vehicle is a Volvo V70.

According to yet another preferred embodiment, the database comprises a set of different values for each type of vehicle. If, for example, a driver is braking when the image is recorded and the vehicle is illuminated, the rear lights, brake lights and reflectors will all create light areas in the digital image. If, however, the driver is not braking, the brake lights will not appear as light areas in the image. This means that the two different alternatives give different values and in order to be able to match the different alternatives to the correct type of car, the database contains both alternatives. Other alternatives can comprise various fault situations, where for example a lamp or reflector is not working.

In a special embodiment, the identification is used when parking a vehicle.

In this method according to the invention, one or more images are recorded of the vehicle's rear registration plate and its rear lights at the entrance to the car park in accordance with the above. In connection with recording the images, the registration plate and the rear lights can be illuminated, for example with infrared light, and thereafter an analysis of the vehicle is carried out using the images in accordance with the above.

The analysis can also include determining the vehicle's registration number.

Thereafter the results of the analysis are stored, together with a link to the vehicle's driver, in a server or the like, for example a database. When the vehicle leaves, the same image recording and analyzes are carried out as when entering, after which these analysis results are compared with the analysis results for entering that are stored for the vehicle's driver. In the event of the analysis results being the same, this shows that a driver wants to retrieve the same vehicle that he drove in, whereupon the vehicle can be allowed to leave, provided that payment for the parking has been made.

As the precise positions of the registration plate and the rear lights are determined in relation to each other and in relation to the body of the vehicle, their height above the ground, etc, measurement values are obtained that are characteristic for each individual vehicle. This is because the plate and the rear lights are placed differently on different models of car, and also because registration plates are fitted manually, for which reason their position is not identical on different vehicles of the same model. These measurement values are not affected by snow or ice. As the vehicle's registration number is also determined, by comprising the results of the analyzes from the entrance and exit checks, it is possible to determine with great accuracy that the driver is driving out the same vehicle that he drove in, and that the registration plate has not been moved to another vehicle.

Another advantage of carrying out measurements for the registration plate and rear lights is that these are normally provided with reflectors, so that light is reflected back from these instead of being dispersed, whereby less light is needed to obtain good images.

If the vehicle is not to be allowed to leave, either because the driver has attempted to drive out a different vehicle to the one he drove in, or because payment has not been made, it is important to be able to prevent it from leaving effectively. This can be carried out by the vehicle being driven forward to a first lowered barrier prior to the exit check, and then a second barrier is lowered behind the vehicle. While the vehicle is thus in a "lock" between a front and a rear barrier, the image recording, analysis and exit check are carried out. If the car is to be allowed to leave, only the front barrier is raised, whereby "tailgating" by a second vehicle is prevented.

The vehicle can also be parked in a similar lock at the entrance control as at the exit control. As the images are recorded while the vehicle is in a lock, at a known distance from the camera, a precise position determination of registration plates and rear lights is made easier.

The analysis results for an entering vehicle are stored in a server, together with a link to the vehicle's driver. This link can be a code that is created when storing the analysis results and that is printed out on a car park ticket for the driver. The driver can later use the car park ticket when paying for the parking and at the exit control. The ticket can also be provided with a picture of the vehicle.

Additional images of the vehicle can be recorded without simultaneous infrared lighting, and the analysis method can comprise these images being subtracted from the images recorded with infrared lighting. By this means, images are obtained that are independent of the general lighting in the car park. By means of this, the problem is solved of the lighting and illumination conditions being different at the entrance and exit controls.

Position determination of the vehicle's tax mark and determination of the car model can also be included in the analysis.

The arrangement according to the invention for carrying out the method consists of an entrance lock and an exit lock, each provided with a digital camera, a control device such as preferably a PC connected to a server, and an infrared illumination unit mounted in association with the camera.

At least the exit lock can be designed with a front and a rear parking barrier, both of which are lowered while the checks are being carried out, after which only the front barrier is raised when the vehicle can be permitted to leave. This lock arrangement prevents tailgating, that is a second vehicle being driven out straight after a first vehicle.

If both the entrance and exit locks are designed in the same way with a front and a rear barrier, the advantage is achieved that the position of the vehicle between the barriers means that its distance to the camera is known, which makes the analyzes easier.

Further characteristics of the invention and its advantages will become apparent from the following detailed description of embodiments according to the invention.

### BRIEF DESCRIPTION OF DRAWINGS

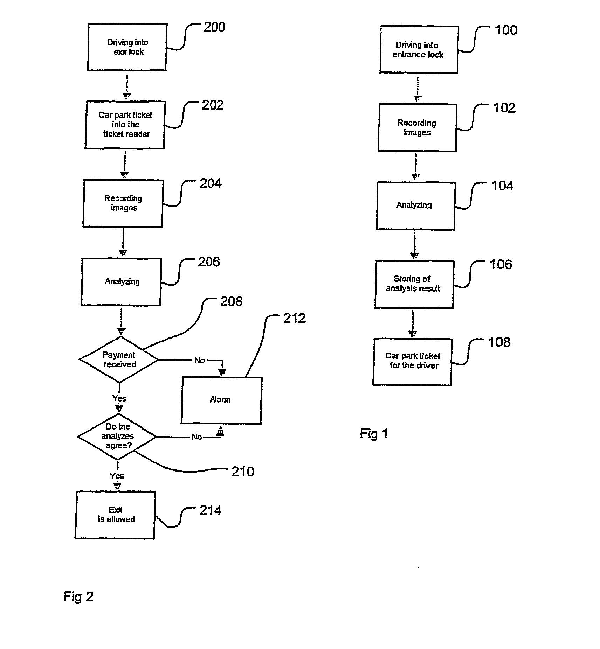

The present invention will be easier to understand from the detailed description of preferred embodiments according to the present invention given below and the attached Figures 1 to 3, which are only intended to illustrate the preferred embodiments and do not restrict the present invention.

The invention will be described in greater detail below with reference to Figures 1-3, in which:
Figure 1 is a flow chart that shows the steps of the method during entering.
Figure 2 is a flow chart that shows the steps of the method during exiting.
Figure 3a shows schematically a traffic control system in a view from the side according to an embodiment of the invention.
Figure 3b shows schematically a vehicle lock in a view from above according to an embodiment of the invention comprising an entrance control and an exit control.

### PREFERRED EMBODIMENTS

In the following, specific techniques and applications are described with the aim of providing a basic understanding of the present invention. However, it will be obvious to experts in the field that the present invention can be implemented in other embodiments that differ from what has been described here in detail. In other cases, detailed descriptions of well-known methods and apparatus have been omitted in order not to obscure the description of the present invention with unnecessary details.

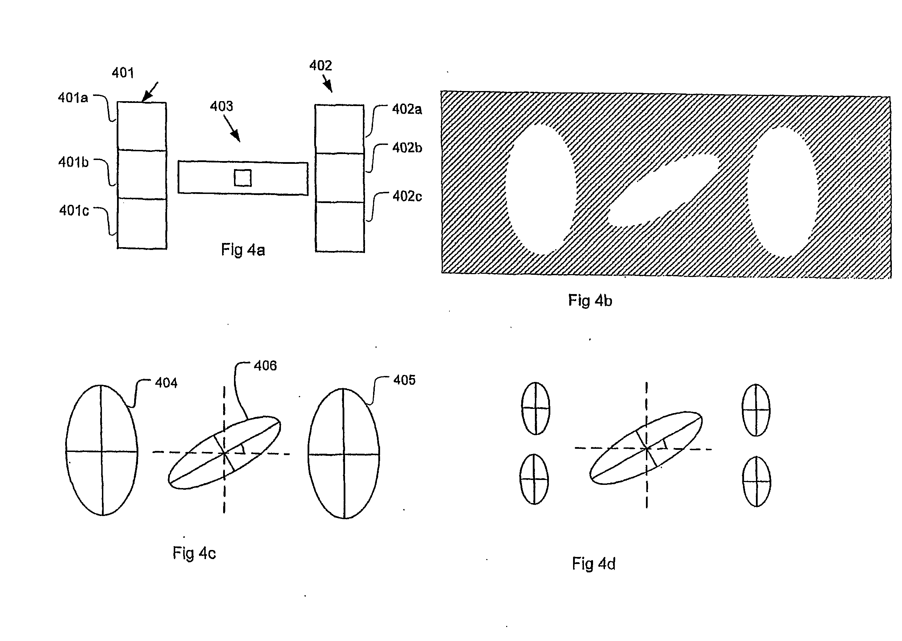

Figure 4a shows a first rear light arrangement 401, a second rear light arrangement 402 and a registration plate 403 on a car, represented schematically. The first rear light arrangement 401 comprises brake light 401a, rear light 401b and reflector 401c and similarly the second rear light arrangement comprises brake light 402a, rear light 402b and reflector 402c. On the registration plate, there is also a tax mark.

Figure 4b shows schematically a digital image of the back of the car in Figure 4a recorded with illumination. In the image, lighter areas are created around the rear light arrangements 401 and 402, in addition to the registration plate 403 which is reflective. When the image in Figure 4b was recorded, the driver was braking, for which reason the light areas comprise the whole of the rear light arrangements 401 and 402.

Figure 4c shows schematically where ovals have been matched to the lighter fields in Figure 4b during the image processing. Three ovals have been identified. A first oval 404 represents the first rear light arrangement 401, a second oval 405 represents the second rear light arrangement and a third oval 406 represents the registration plate 403. The ovals 404, 405 and 406 have each a longer axis and a shorter axis and a center of gravity (where the longer and shorter axes intersect). On the basis of the values of the axes and the position of the centers of gravity in relation to each other, and if required also how the axes are rotated in relation to each other, that is how the rear lights and the registration plate are oriented on the car, the type of car can be uniquely identified. It should be noted that additional ovals or other geometric figures can be matched to each lighter field in order, in this way, also to identify the shape of the field. If, for example, the field is an L-shape, a first oval can be matched to the vertical part of the field and a second shape to the horizontal part of the field. By comparing the positions and sizes of the axes of the matched ovals, it can be concluded that the light field is an L-shape, which can be characteristic of a certain type of car.

Other identification values can also be used, for example the length of the car can be measured by ultrasound, the height above the ground of the rear light arrangements can be measured, the color of the car can be identified, etc.

When the type of vehicle has been identified, the displacement of the registration plate from the normal value in relation to the position of the rear light arrangements and its rotation can be calculated. These values, the position (two values) and the rotation (one value) identify the car uniquely.

Figure 4d illustrates a case where both rear lights 401b and 402b are not working. This will result in two ovals being created for each rear light arrangement 401 and 402. In order for the computer to be able to identify the type of car, this case must also be recorded in the database. The database will in fact consist of a whole set of different cases for each model of car, where different combinations of possibilities are listed. For example, the fact that the left rear light is not working, that the right reflector is covered by snow, that the driver is braking or not braking, etc. These cases can be recorded by recording images of a known vehicle and letting the computer analyze the image and thereafter specifying which model of car the analysis represents or by carrying out simulations in the computer.

It should be noted that the method described above can also be used from in front of a vehicle, with the position, shape and orientation of the front lights and the registration plate on the front of the car being identified.

Figure 1 shows a flow chart of the steps that are carried out at the entrance control according to a preferred embodiment of the method according to the invention in order to check vehicles in car parks. In step 100, the vehicle is driven into the entrance lock, so that it is located between a front and a rear barrier. In step 102, an image is recorded of the vehicle using a digital camera, such as for example a CCD (charge-coupled device) camera. The camera is mounted in such a way that it can record images of the vehicle's rear registration plate and rear lights. In addition, an infrared illumination unit provided with infrared light-emitting diodes is mounted in the vicinity of the camera to illuminate the registration plate and the rear lights. Images can be recorded both with and without infrared illumination, in order to obtain measurement results that are independent of the general lighting. In step 104, an analysis is carried out by a control unit, preferably a PC, connected to the camera. In addition, the PC is connected to a server or the like for storing the results of the analysis, and the PC or the server is provided with analysis software. This software comprises programs for position determination of the registration plate by means of the images, and a system that extracts the registration number from a camera image. The analysis can also comprise determination of the model of car and of the position of the tax mark. In step 106, the results of the analysis are stored in the server, whereby a code is created that gives access to the results of the analysis. In step 108, the driver of the vehicle receives a car park ticket, provided with the code, from a ticket printing machine. The ticket printing machine is located beside the lock and is connected to the control unit. If required, the car park ticket can also be provided with a picture of the vehicle.

Figure 2 illustrates the steps that are carried out when the vehicle leaves, according to the preferred embodiment of the invention. In step 200, the driver has retrieved his vehicle and driven into the exit lock. This is designed in a similar way to the entrance lock, with a digital camera, an infrared illumination unit and a PC connected to a server. However, it is provided with a ticket reader instead of a ticket printer, for reading the driver's car park ticket, according to step 202. In step 204, an image is recorded with infrared illumination, as in step 102 at the entrance, while the vehicle is located between a front and a rear barrier. In step 206, the same analyzes are carried out as at the entrance, that is primarily a precise position determination of the vehicle's registration plate and rear lights, using the infrared illumination that is reflected from the plate and the rear lights, and determination of the vehicle's registration number. In step 208, it is checked that payment has been received for the parking, and if this is the case, in a step 210, a comparison is then carried out between the results of the analyzes from step 206 and the driver's stored analysis results from step 104 at the entrance, which the PC can read off by means of the code on the car park ticket. In step 214, the car is allowed to leave by the front barrier being raised, if the comparison in step 210 showed that the vehicle that the driver intends to drive out is the same vehicle as the one that he drove in. As a result of only the front barrier being raised, so-called tailgating is prevented, that is an additional vehicle being driven out straight after the first. In the alternative step 212, the vehicle is instead to be prevented from leaving, and the barriers are not raised, but instead a park attendant is notified. The attendant can then carry out a manual check of the driver's identity and the identity of the vehicle, and can allow the vehicle to leave or can call the police.

In a second embodiment of the invention, no car park ticket is printed out. Instead an account card belonging to the driver is used, with information on this being able to be linked to the stored analysis results for the parked vehicle.

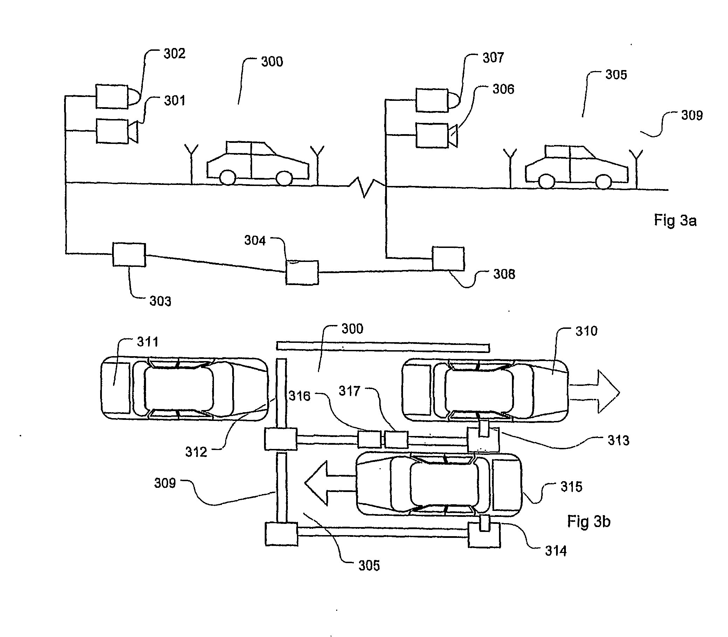

Figure 3a illustrates the arrangement according to the invention for checking vehicles in a car park. A vehicle that is to be parked is driven into the entrance lock 300. There images are recorded of the vehicle's registration plate and rear lights using a digital camera 301. The car can be illuminated by an infrared illumination unit 302, mounted close to the digital camera, whereby images can be recorded with the infrared illumination switched on. Analyzes of the images are then carried out by a computer 303, after which the results are stored in a server 304, together with a link to the driver of the vehicle, by the driver obtaining a car park ticket that gives access to the results of the analyzes, or by information from an account card that belongs to the driver being stored together with the results of the analyzes.

A vehicle that is to be retrieved from the car park is driven into the exit lock 305 where images are recorded of the vehicle by means of a digital camera 306, while at the same time, if required, the vehicle is illuminated by an infrared illumination unit 307. Analyzes are carried out in a computer 308, after which the results of the analyzes are compared with the results which were obtained when the vehicle entered the car park and which are stored in the server. If the comparison shows that the driver intends to drive out the same vehicle that he drove in, the front barrier 309 is raised, so that the vehicle is allowed to leave.

Figure 3b shows schematically a vehicle lock in a view from above according to an embodiment of the invention comprising an entrance control 300 and an exit control 305. The entrance and exit controls work in the same way. A first vehicle 310 is on its way out from the entrance control and a second vehicle 311 is waiting to be able to enter the entrance control 300. An entry barrier 312 prevents the first vehicle 311 from coming into the entrance control 300 while the first vehicle 310 is driving out. The first vehicle is allowed to drive out by the removal of an exit barrier 313. In the present embodiment, the entry and exit barriers consist of barriers that are raised and lowered. At the same time, a third vehicle 315 is on its way into the exit control 305. It is allowed to enter by an entry barrier 314 having been removed, in this case a barrier has been raised. As can be seen easily in Figure 3b, the third vehicle 315 cannot drive straight through the exit control in order to sneak through, as an exit barrier 309 prevents exit from the exit control 305. In addition, first and second ticket machines 316 and 317, comprising for example thermal printers, are arranged to issue or receive tickets, or other forms of identification, for example credit cards, in order to identify the vehicle. In addition, cameras (not shown) are arranged to photograph the vehicle and at least one computer and database are arranged to carry out an analysis and to store results, in order in this way to be able to carry out the identification as discussed above and below.

With reference to Figures 1 and 2, the method for checking vehicles according to the invention thus comprises steps of identifying a vehicle by recording images 102, 204 and by analysis 104, 206 of images at an entrance control and at an exit control. The images and/or the analysis results from the entrance control are stored 106 and a comparison 210 is carried out of the analysis results from the exit control with the stored analysis results from the entrance control. On the basis of the result of the comparison, the vehicle is prevented 212 or allowed 214 to leave. The vehicle is admitted to the exit control by the vehicle being driven forwards 200 to a front exit barrier at the exit control. A rear exit barrier is then set up behind the vehicle, so that additional vehicles are prevented from entering the exit control and so that the vehicle cannot reverse out. If the comparison above is positive, that is if the vehicle is to be allowed to leave the control, the front exit barrier is removed, whereby other vehicles are prevented by the rear exit barrier from driving through the exit control at the same time as the vehicle.

According to the embodiment in Figure 3, the entrance control also comprises a front and a rear exit barrier. At the entrance control, the vehicle is driven forwards to the front exit barrier and the rear exit barrier is set up behind the vehicle. The front exit barrier is then removed when the vehicle is to be allowed to pass through, whereby other vehicles are prevented from driving through the entrance control at the same time as the vehicle. Alternatively, the entrance control can only comprise a front barrier.

According to the embodiment in Figure 3, the front exit barrier is set up again after the vehicle has passed and the rear exit barrier is not removed until after the front exit barrier has been set up again, so that further vehicles can drive into the said passage control.

According to an alternative embodiment, the front and rear exit barriers can be barriers that are lowered and raised or raised and lowered automatically in order to prevent or allow the passage of vehicles.

In the embodiment in Figure 3, the analysis comprises identifying the position and orientation on the car of at least one light arrangement and of determining what type of car is in the passage control on the basis of information stored in a database relating to the position and orientation of light arrangements on different types of cars and the said identification of the position and orientation of the said light arrangement. Comparing an analysis result in order just to be able to identify the type of vehicle on the basis of a database of vehicles requires only a relatively rough analysis of the image. The analysis also comprises identifying the position on the car and the orientation of the registration plate in relation to the identified position of the light arrangement by image analysis of the image in order thereby to obtain a unique identification of the said vehicle. By first identifying the type of car and then analyzing the position and orientation of the registration plate with knowledge of the type of car that the registration plate is attached to, an excellent and precise result is obtained. By this means, the car can be uniquely identified.

By information about both the vehicle's registration number and the precise position of the registration plate being determined and recorded at the entrance control, and then the same information being determined at the exit control, the theft of a valuable vehicle by changing the registration plates is prevented from being carried out.

It is obvious that the present invention can be varied in many different ways. Such variations are not to be regarded as a deviation from the scope of the present invention. All such modifications that are apparent to experts in the field are intended to be included within the scope of the attached claims.

## Claims

1. A method for checking vehicles in a car park comprising identification of a vehicle by recording images (102, 204) and analysis (104, 206) of the said vehicle at an entrance control and at an exit control, storage (106) of the analysis results from the entrance control, comparison (210) of the analysis results from the exit control with the stored analysis results from the entrance control, and preventing (212) or allowing (214) the said vehicle to.leave, **characterized in that**
- at the exit control, the said vehicle is driven forwards (200) to a front exit barrier,
- a rear exit barrier is set up behind the said vehicle,
- said analysis (104, 206) involves identifying, in at least one of said images taken at the entrance control and at least one of said images taken at the exit control, the position of at least one reflector device on said vehicle,
- said comparison (210) involves comparing said identified reflector device, and
- only the said front exit barrier is removed when the vehicle is to be allowed (214) to leave, whereby other vehicles are prevented from driving through the exit control at the same time as the said vehicle.

2. A method as claimed in claim 1, **characterized in that**
- the said entrance control comprises a front and a rear exit barrier,
- at the entrance control, the said vehicle is driven forwards to the said front exit barrier,
- the said rear exit barrier is set up behind the said vehicle, and
- only the said front exit barrier is removed when the vehicle is to be allowed to pass through, whereby other vehicles are prevented from driving through the entrance control at the same time as the said vehicle.

3. A method as claimed in claim 1 or 2, comprising the steps of
- the said front exit barrier being set up again after the said vehicle has passed through,
- the said rear exit barrier being removed after the said front exit barrier is set up again to allow another vehicle to drive into the said passage control.

4. A method as claimed in any one of claims 1-3, **characterized in that** the said front and rear exit barriers are barriers that are lowered and raised or raised and lowered automatically in order to prevent or allow the passage of vehicles.

5. A method as claimed in any one of claims 1-4, **characterized in that** a receipt generated at the entrance control constitutes a code that is created during the storage (106) of the analysis results and printed out onto a car park ticket (108) for the driver of the vehicle, to be used by the driver when paying for the parking and at the exit control (202).

6. A method as claimed in claim 5, **characterized in that** the receipt consists of the recording of a code, obtained for example from a bank card or credit card provided by the driver of the vehicle, together with the analysis results from the entrance control.

7. A method as claimed in any one of claims 1-6, **characterized in that** the said analysis comprises
- identifying the position and orientation on the car of at least one light arrangement by means of the said analysis of the said image recording,
- determining the type of vehicle on the basis of information stored in a database relating to the position and orientation of light arrangements on different types of cars and the said identification of the position and orientation of the said light arrangement,
- identifying the position on the car and the orientation of the said registration plate in relation to the identified position of the said light arrangement by means of the said image analysis of the said first image in order thereby to obtain a unique identification of the said vehicle.

8. A vehicle lock in a car park arranged to allow vehicles to pass through in a secure way from a first area to a second area, **characterized in that**
- an entry barrier is arranged to prevent entry to the said vehicle lock in a first position and to allow entry to the said vehicle lock in a second position,
- an exit barrier is arranged to prevent exit from the said vehicle lock in a first position and to allow exit from the said vehicle lock in a second position, with
- the said entry barrier being arranged to prevent entry into the said vehicle lock when the said exit barrier allows exit from the said lock, and
- the said exit barrier being arranged to prevent exit from the said vehicle lock when the said entry barrier allows entry into the said vehicle lock, and
- an identification device is provided to identify at least one reflector device on said vehicle and that the position of said reflector device is used in determining if a vehicle is allowed to pass through said vehicle lock.

9. A traffic control system for controlling the entry of vehicles from an outer area to an inner area and exit from the said inner area to the said outer area,
**characterized in that**
- entry to and exit from the said inner area takes place by means of at least one road, and a vehicle lock as claimed in claim 8 is arranged to control vehicles that pass along the said road.

10. A traffic control system as claimed in claim 9, **characterized in that** a first vehicle lock is arranged to control vehicles that are entering into the said inner area on an entrance road and a second vehicle lock is arranged to control vehicles that are leaving the said inner area on an exit road, where the said first and second vehicle locks are a vehicle lock as claimed in claim 8.

## Patentansprüche

1. Verfahren zur Überprüfung von Fahrzeugen auf einem Parkplatz, wobei ein Fahrzeug durch die Aufzeichnung von Bildern (102, 204) und die Analyse (104, 206) des Fahrzeugs an einer Einfahrtskontrolle und an einer Ausfahrtskontrolle identifiziert wird, die Analyseergebnisse von der Einfahrtskontrolle gespeichert (106) werden, die Analyseergebnisse von der Ausfahrtskontrolle mit den gespeicherten Analyseergebnissen von der Einfahrtskontrolle verglichen (210) werden und das Fahrzeug am Verlassen des Parkplatzes gehindert (212) wird oder dem Fahrzeug das Verlassen des Parkplatzes gestattet (214) wird, **dadurch gekennzeichnet, dass**
- das Fahrzeug an der Ausfahrtskontrolle an eine vordere Ausfahrtssperre herangefahren (200) wird,
- eine hintere Ausfahrtssperre hinter dem Fahrzeug errichtet wird,
- die Analyse (104, 206) das Identifizieren der Position mindestens einer Reflektorvorrichtung am Fahrzeug in mindestens einem der an der Einfahrtskontrolle aufgenommenen Bilder und in mindestens einem der an der Ausfahrtskontrolle aufgenommenen Bilder umfasst,
- der Vergleich (210) den Vergleich der identifizierten Reflektorvorrichtung umfasst und
- nur die vordere Ausfahrtssperre entfernt wird, wenn dem Fahrzeug das Verlassen des Parkplatzes gestattet (214) wird, wodurch andere Fahrzeuge daran gehindert werden, zur selben Zeit wie das Fahrzeug durch die Ausfahrtskontrolle zu fahren.

2. Verfahren nach Anspruch 1, **dadurch gekennzeichnet, dass**
- die Einfahrtskontrolle eine vordere und eine hintere Ausfahrtssperre umfasst,
- das Fahrzeug an der Einfahrtskontrolle an die vordere Ausfahrtssperre herangefahren wird,
- die hintere Ausfahrtssperre hinter dem Fahrzeug errichtet wird und
- nur die vordere Ausfahrtssperre entfernt wird, wenn dem Fahrzeug das Durchfahren gestattet wird, wodurch andere Fahrzeuge daran gehindert werden, zur selben Zeit wie das Fahrzeug durch die Einfahrtskontrolle zu fahren.

3. Verfahren nach Anspruch 1 oder 2, mit den folgenden Schritten:
- die vordere Ausfahrtssperre wird nach dem Durchfahren des Fahrzeugs wieder errichtet,
- die hintere Ausfahrtssperre wird nach dem erneuten Errichten der vorderen Ausfahrtssperre entfernt, damit ein anderes Fahrzeug in die Durchfahrtskontrolle fahren kann.

4. Verfahren nach einem der Ansprüche 1 - 3, **dadurch gekennzeichnet, dass** es sich bei der vorderen und der hinteren Ausfahrtssperre um Sperren handelt, die automatisch gesenkt und angehoben oder angehoben und gesenkt werden, um die Durchfahrt von Fahrzeugen zu verhindern oder zu gestatten.

5. Verfahren nach einem der Ansprüche 1 - 4, **dadurch gekennzeichnet, dass** eine an der Einfahrtskontrolle generierte Quittung einen Kode darstellt, der während der Speicherung (106) der Analyseergebnisse erzeugt und auf einem Parkschein (108) für den Fahrer des Fahrzeugs ausgedruckt wird, der vom Fahrer bei der Zahlung der Parkgebühren und an der Ausfahrtskontrolle (202) zu verwenden ist.

6. Verfahren nach Anspruch 5, **dadurch gekennzeichnet, dass** die Quittung aus der Aufzeichnung eines Kodes besteht, der beispielsweise von einer vom Fahrer des Fahrzeugs bereitgestellten Bankkarte oder Kreditkarte erhalten wird, zusammen mit den Analyseergebnissen von der Einfahrtskontrolle.

7. Verfahren nach einem der Ansprüche 1 - 6, **dadurch gekennzeichnet, dass** die Analyse Folgendes umfasst:
- Identifizieren der Position mindestens einer Beleuchtungsanordnung und ihrer Orientierung am Auto mittels der Analyse der Bildaufzeichnung,
- Bestimmen des Fahrzeugtyps auf der Grundlage von in einer Datenbank gespeicherten Informationen über die Position und Orientierung von Beleuchtungsanordnungen an unterschiedlichen Autotypen und der Identifizierung der Position und Orientierung der Beleuchtungsanordnung,
- Identifizieren der Position am Auto und der Orientierung des Nummernschilds in Bezug auf die identifizierte Position der Beleuchtungsanordnung mittels der Bildanalyse des ersten Bilds, um **dadurch** eine eindeutige Identifizierung des Fahrzeugs zu erhalten.

8. Fahrzeugschleuse auf einem Parkplatz, die so angeordnet ist, dass sie Fahrzeuge sicher von einem ersten Bereich zu einem zweiten Bereich hindurchfahren lässt, **dadurch gekennzeichnet, dass**
- eine Einfahrtssperre so angeordnet ist, dass sie die Einfahrt in die Fahrzeugschleuse in einer ersten Position verhindert und die Einfahrt in die Fahrzeugschleuse in einer zweiten Position gestattet,
- eine Ausfahrtssperre so angeordnet ist, dass sie die Ausfahrt aus der Fahrzeugschleuse in einer ersten Position verhindert und die Ausfahrt aus der Fahrzeugschleuse in einer zweiten Position gestattet, wobei
- die Einfahrtssperre so angeordnet ist, dass sie die Einfahrt in die Fahrzeugschleuse verhindert, wenn die Ausfahrtssperre die Ausfahrt aus der Schleuse gestattet, und
- die Ausfahrtssperre so angeordnet ist, dass sie die Ausfahrt aus der Fahrzeugschleuse verhindert, wenn die Einfahrtssperre die Einfahrt in die Fahrzeugschleuse gestattet, und
- eine Identifikationsvorrichtung vorgesehen ist, um mindestens eine Reflektorvorrichtung am Fahrzeug zu identifizieren, und dass die Position der Reflektorvorrichtung zur Bestimmung verwendet wird, ob einem Fahrzeug die Durchfahrt durch die Fahrzeugschleuse gestattet wird.

9. Verkehrskontrollsystem zur Kontrolle der Einfahrt von Fahrzeugen von einem äußeren Bereich in einen inneren Bereich und der Ausfahrt aus dem inneren Bereich in den äußeren Bereich, **dadurch gekennzeichnet, dass**
- die Einfahrt in den und die Ausfahrt aus dem inneren Bereich über mindestens eine Straße erfolgt und eine Fahrzeugschleuse nach Anspruch 8 zur Kontrolle von Fahrzeugen, die auf dieser Straße entlangfahren, angeordnet ist.

10. Verkehrskontrollsystem nach Anspruch 9, **dadurch gekennzeichnet, dass** eine erste Fahrzeugschleuse angeordnet ist, um Fahrzeuge zu kontrollieren, die auf einer Einfahrtsstraße in den inneren Bereich fahren, und eine zweite Fahrzeugschleuse angeordnet ist, um Fahrzeuge zu kontrollieren, die auf einer Ausfahrtsstraße den inneren Bereich verlassen, wobei es sich bei der ersten und der zweiten Fahrzeugschleuse jeweils um eine Fahrzeugschleuse nach Anspruch 8 handelt.

## Revendications

1. Procédé pour contrôler les véhicules dans un parc de stationnement comprenant l'identification d'un véhicule par enregistrement d'images (102, 204) et l'analyse (104, 206) dudit véhicule à un contrôle à l'entrée et à un contrôle à la sortie, stockage (106) des résultats d'analyse provenant du contrôle à l'entrée, comparaison (210) des résultats d'analyse provenant du contrôle à la sortie avec les résultats d'analyse provenant du contrôle à l'entrée précédemment stockés et interdiction (212) ou permission (214) au véhicule de partir, **caractérisé en ce que**
- au contrôle à la sortie, ledit véhicule est avancé (200) jusqu'à une barrière de sortie avant,
- une barrière de sortie arrière s'abaisse derrière ledit véhicule,
- ladite analyse (104, 206) implique d'identifier, sur au moins une desdites images prises au contrôle à l'entrée et au moins une desdites images prises au contrôle à la sortie, la position d'au moins un dispositif réflecteur sur ledit véhicule,
- ladite comparaison (210) implique de comparer ledit dispositif réflecteur identifié, et
- ladite barrière de sortie avant ne sera levée que quand le véhicule sera autorisé (214) à partir, moyennant quoi d'autres véhicules seront empêchés de traverser le contrôle à la sortie en même temps que ledit véhicule.

2. Procédé selon la revendication 1, **caractérisé en ce que**
- ledit contrôle à l'entrée comprend une barrière de sortie avant et une barrière de sortie arrière,
- au contrôle à l'entrée, ledit véhicule est avancé jusqu'à ladite barrière de sortie avant,
- ladite barrière de sortie arrière s'abaisse derrière ledit véhicule, et
- ladite barrière de sortie avant ne sera levée que quand le véhicule sera autorisé à traverser, moyennant quoi d'autres véhicules sont empêchés de traverser le contrôle à l'entrée en même temps que ledit véhicule.

3. Procédé selon la revendication 1 ou 2, comprenant les étapes consistant à
- abaisser à nouveau ladite barrière de sortie avant après que ledit véhicule ait traversé,
- relever ladite barrière de sortie arrière après que ladite barrière de sortie avant ait été à nouveau abaissée afin de permettre à un autre véhicule d'entrer dans ledit contrôle de passage.

4. Procédé selon l'une quelconque des revendications 1 à 3, **caractérisé en ce que** ladite barrière de sortie avant et ladite barrière de sortie arrière sont des barrières qui s'abaissent et se relèvent ou se relèvent et s'abaissent automatiquement afin d'empêcher ou de permettre le passage de véhicules.

5. Procédé selon l'une quelconque des revendications 1 à 4, **caractérisé en ce qu'**un reçu créé au contrôle à l'entrée constitue un code qui est créé pendant le stockage (106) des résultats de l'analyse et imprimé sur un ticket (108) de parc de stationnement pour le conducteur du véhicule, à utiliser par le conducteur quand il paiera pour le stationnement et au contrôle à la sortie (202).

6. Procédé selon la revendication 5, **caractérisé en ce que** le reçu consiste en l'enregistrement d'un code, obtenu par exemple à partir d'une carte bancaire ou d'une carte de crédit présentée par le conducteur du véhicule, ainsi que les résultats d'analyse provenant du contrôle à l'entrée.

7. Procédé selon l'une quelconque des revendications 1 à 6, **caractérisé en ce que** ladite analyse comprend
- l'identification de la position et de l'orientation sur la voiture d'au moins une disposition lumineuse au moyen de ladite analyse dudit enregistrement d'images,
- la détermination du type de véhicule sur la base des informations stockées dans une base de données concernant la position et l'orientation des dispositions lumineuses sur différents types de voitures et de ladite identification de la position et de l'orientation de ladite disposition lumineuse,
- l'identification de la position sur la voiture et de l'orientation de ladite plaque d'immatriculation par rapport à la position de ladite disposition lumineuse identifiée au moyen de ladite analyse d'image de ladite première image afin d'obtenir de ce fait une identification unique dudit véhicule.

8. Sas à véhicule dans un parc de stationnement disposé pour permettre aux véhicules de passer de façon sécurisée d'une première zone à une seconde zone,
**caractérisé en ce que**
- une barrière d'entrée est disposée pour, dans une première position, interdire l'entrée dans ledit sas à véhicule et, dans une seconde position, autoriser l'entrée dans ledit sas à véhicule,
- une barrière de sortie est disposée pour, dans une première position, interdire la sortie dudit sas à véhicule et, dans une seconde position, autoriser la sortie dudit sas à véhicule,
- ladite barrière d'entrée étant disposée pour interdire l'entrée dans ledit sas à véhicule quand ladite barrière de sortie autorise la sortie dudit sas à véhicule, et
- ladite barrière de sortie étant disposée pour interdire la sortie dudit sas à véhicule quand ladite barrière d'entrée autorise l'entrée dans ledit sas à véhicule, et
- un dispositif d'identification est mis en place pour identifier la position d'au moins un dispositif réflecteur sur ledit véhicule et la position dudit dispositif réflecteur est utilisée pour déterminer si le véhicule est autorisé à traverser ledit sas à véhicule.

9. Système de contrôle de circulation pour contrôler l'entrée de véhicules d'une zone extérieure à une zone intérieure et la sortie de ladite zone intérieure à ladite zone extérieure, **caractérisé en ce que**
l'entrée dans ladite zone intérieure et la sortie de celle-ci se font au moyen d'au moins une route et un sas à véhicule selon la revendication 8 est disposé pour contrôler les véhicules qui passent sur ladite route.

10. Système de contrôle de circulation selon la revendication 9, **caractérisé en ce qu'**un premier sas à véhicule est disposé pour contrôler les véhicules qui entrent dans ladite zone intérieure sur une route d'entrée et qu'un second sas à véhicule est disposé pour contrôler les véhicules qui quittent ladite zone intérieure sur une route de sortie, lesdits premier et second sas à véhicule étant des sas à véhicule selon la revendication 8.
